# EUROPÄISCHE PATENTSCHRIFT

(11) **EP 0 617 832 B1**
(45) Veröffentlichungstag und Bekanntmachung des Hinweises auf die Patenterteilung: **13.03.1996**
(21) Anmeldenummer: 92924557.9
(22) Anmeldetag: 08.12.1992
(51) Int. Cl.: G11B 33/00

(54) **ABDECKVORRICHTUNG ZUM SPERREN DES ZUGRIFFS ZU SPEICHEREINHEITEN EINER DATENVERARBEITUNGSEINHEIT**
SHUTTER DEVICE FOR PREVENTING ACCESS TO THE STORAGE UNITS OF A DATA-PROCESSING UNIT
DISPOSITIF D'OBTURATION POUR FERMER L'ACCES AUX UNITES DE MEMOIRE D'UNE UNITE DE TRAITEMENT DE DONNEES

(30) Priorität: 19.12.1991 DE 9115781 U
(43) Veröffentlichungstag der Anmeldung: 05.10.1994
(73) Patentinhaber: Siemens Nixdorf Informationssysteme Aktiengesellschaft, D-33102 Paderborn (DE)
(72) Erfinder: KÖHLER, Friedrich, D-8901 Meitingen (DE)
(74) Vertreter: Fuchs, Franz-Josef, Dr.-Ing.
(86) Internationale Anmeldenummer: DE9201021
(87) Internationale Veröffentlichungsnummer: WO9312524

(56) Entgegenhaltungen:
- WO-A-90/01604
- DE-A- 3 702 821
- DE-A- 3 933 091
- DE-U- 9 115 781
- US-A- 4 794 587
- US-A- 4 854 651
- US-A- 4 901 879

## Beschreibung

### Datenverarbeitungseinheit mit wenigstens einer Speichereinheit

Die Erfindung betrifft eine Datenverarbeitungseinheit gemäß den Merkmalen des Oberbegriffs des Anspruchs 1.

Beim Einsatz von Datenverarbeitungseinheiten, beispielsweise Personalcomputern, besteht die Möglichkeit, die Verarbeitungseinheit durch Befehle über einen längeren Zeitraum hinweg, gegebenenfalls auch unbedient arbeiten zu lassen. Eine derartige Betriebsart kann auftreten bei einer Stapelverarbeitung, beim Ausdrucken von Daten, bei Datensicherungsläufen zum Übertragen von in einem Speichermedium gespeicherten Daten auf ein anderes Speichermedium oder bei der Zusammenarbeit in lokalen Netzen oder mit Großrechnern.

Bei einer derartigen Betriebsart kann nicht ausgeschlossen werden, daß eine Bedienperson zwischenzeitlich die Verarbeitungseinheit verläßt und sich anderen Arbeiten zuwendet. Außerdem ist auch bei einem normalen Betrieb mit Arbeitspausen oder Arbeitsunterbrechungen zu rechnen, in denen die Verarbeitungseinheit unbeaufsichtigt bleibt.

Wenn bei den obengenannten Betriebsarten die Verarbeitungseinheit unbeaufsichtigt bleibt, besteht die Gefahr, daß von den Speichereinheiten die Datenträger unerlaubter Weise entnommen werden.

Es ist daher bereits eine Vorrichtung zum Sperren des Zugriffs zu einer Verarbeitungseinheit bekannt, bei der eine verschiebbare Klappe vor den Öffnungen der Speichereinheiten anbringbar und mittels einer Schließeinrichtung abschließbar ist (DE 37 02 821 C2). Bei dieser bekannten Abdeckung befindet sich die verschiebbare Klappe hinter einem Ausschnitt in der Gehäusefrontplatte, wo sie durch seitliche an der Innenseite der Frontplatte vorhandene Halteelemente geführt wird. Eine weitere Abdeckvorrichtung ist aus dem deutschen Gebrauchsmuster DE 91 02 939 bekannt. Diese bekannte Vorrichtung besteht aus einer die Frontplatte des Datenverarbeitungsgerätes an parallel zur Verschieberichtung verlaufenden Kanten U-förmig umgreifenden Schieberblende, deren freie U-Schenkel die Frontplatte hintergreifen. Ferner ist eine im U-Schenkelbereich der Schieberblende vorgesehene Einschnappmulde für ein im Sperrbereich räumlich zugeordnetes Rastelement eines dem Gerät zugeordneten Schwenkhebelschlosses vorhanden.

Der vorliegenden Erfindung liegt nun die Aufgabe zugrunde, eine Datenverarbeitungseinheit der eingangs genannten Art so zu gestalten, daß ein mißbräuchliches Entfernen der Abdeckung verhindert und darüberhinaus bei geringem Aufwand eine effektive Verriegelung erreicht werden kann, so daß der mißbräuchliche Zugriff zu den Speichereinheiten wirksam unterbunden wird.

Die Lösung dieser Aufgabe ergibt sich erfindungsgemäß durch die Merkmale des Anspruchs 1. Da die Schieberblende hinter der Frontblende des Gerätes läuft, ist ein mißbräuchliches Entfernen der Schieberblende praktisch unmöglich. Die mit Hilfe des Griffelements leicht bewegbare Schieberblende hat darüberhinaus den Vorteil, daß sie aufgrund der besonderen Formgebung mit geringem Aufwand gut und sicher verriegelbar ist.

Vorteilhafte Weiterbildungen der Erfindung ergeben sich aus den Merkmalen der Unteransprüche.

Ein Ausführungsbeispiel der Erfindung wird im folgenden anhand der Zeichnung näher erläutert. Dabei zeigen:
- FIG 1: die Vorderansicht einer Datenverarbeitungseinheit mit Speicherlaufwerken und einer erfindungsgemäß ausgebildeten Abdeckvorrichtung,
- FIG 2: eine Seitenansicht der Anordnung gemäß FIG 1,
- FIG 3: die Anordnung gemäß FIG 1 bei geschlossener Schieberblende.

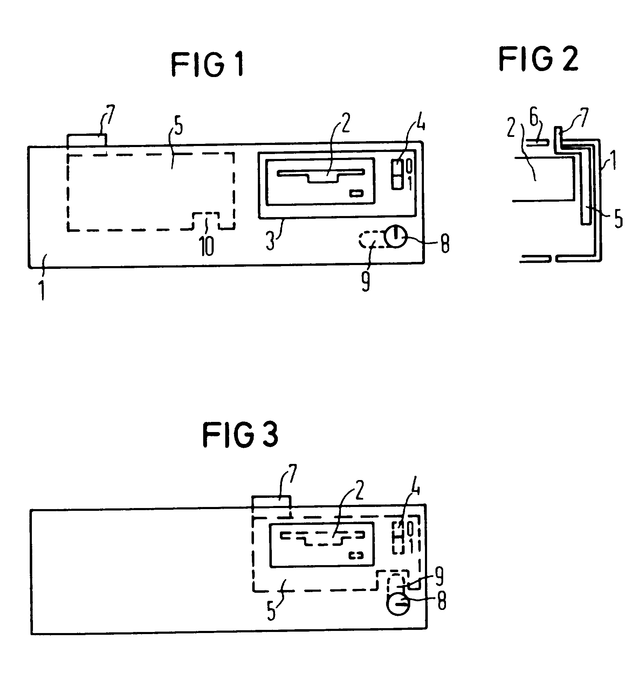

Die FIG 1 zeigt die Vorderseite einer beispielsweise als Tischrechner ausgebildeten Datenverarbeitungseinheit mit einer Frontblende 1, die im Bereich des Speicherlaufwerks 2 eine rechteckige Aussparung 3 aufweist, über die tragbare Datenträger frontseitig zuführbar bzw. entnehmbar sind. Innerhalb der Aussparung 3 ist ferner ein Schalter 4 zum Ein- bzw. Ausschalten des Gerätes plaziert. Hinter der Frontblende 1 befindet sich eine Schieberblende 5, die im geöffnetem Zustand seitlich neben dem Speicherlaufwerk 2 angeordnet ist. Die Schieberblende 5 ist horizontal verschiebbar angeordnet und läßt sich bei Bedarf vor das Speicherlaufwerk 2 schieben und dort mittels eines schlüsselbetätigbaren Schwenkhebelschlosses 8 verriegeln.

Aus der in FIG 2 gezeigten seitlichen Darstellung ist erkennbar, daß die Frontblende 1 einen U-förmigen Querschnitt aufweist. Entsprechend dieser U-Form ist die hinter der Frontblende 1 angeordnete Schieberblende 5 im oberen Bereich L-förmig abgewinkelt. Dieser L-förmig abgewinkelte Schenkelansatz reicht bis zu einer zwischen Frontblende 1 und dem Gehäuse 6 der Datenverarbeitungseinheit verlaufenden Trennschlitz. Am linken Rand des Schenkelansatzes ist ferner ein aus dem Trennschlitz senkrecht herausragendes Ansatzstück vorgesehen, das als Griffelement zum Hin- und Herbewegen der Schieberblende 5 dient.

Die FIG 3 zeigt die Anordnung gemäß FIG 1 bei geschlossener Schieberblende 5. In dieser Stellung kann die Schieberblende 5 mit Hilfe des schlüsselbetätigbaren Schwenkhebelschlosses 8 verriegelt werden, so daß das Gerät gegen einen unberechtigten Zugriff geschützt ist. Da die Schieberblende 5 in dieser Stellung sowohl das Speicherlaufwerk 2 als auch den Schalter 4 abdeckt, kann das Gerät weder eingeschaltet noch das Speicherlaufwerk 2 bedient werden. Die Verriegelung der Schieberblende 5 geschieht auf einfache Weise dadurch, daß ein Schenkhebel 9 des Schwenkhebelschlosses 8 beim Verschwenken in die Verriegelungsstellung in eine nutartige Aussparung 10 an der unteren Begrenzungskante der Schieberblende 5 eintaucht.

## Patentansprüche

1. Datenverarbeitungseinheit mit wenigstens einer Speichereinheit für über die Frontseite der Datenverarbeitungseinheit zuführbare bzw. entnehmbare tragbare Datenträger, und mit einer die Speichereinheit abdeckenden horizontal bewegbaren Schieberblende, die im geschlossenen Zustand mittels eines schlüsselbetätigbaren Schwenkhebelschlosses verriegelbar ist,
**dadurch gekennzeichnet**, daß die Schieberblende (5) hinter einer die Frontseite der Datenverarbeitungseinheit mit Ausnahme der Speichereinheit (2) abdeckenden Frontblende (1) angeordnet ist und ein aus einem Trennschlitz zwischen Frontblende (1) und dem Gehäuse (6) der Datenverarbeitungseinheit herausragendes Griffelement (7) aufweist und daß die Schieberblende (5) an wenigstens einer der parallel zur Schieberichtung verlaufenden Begrenzungskanten eine nutartige Aussparung (10) für einen im Sperrzustand einschwenkbaren und verriegelbaren Schwenkhebel (9) des Schwenkhebelschlosses (8) aufweist.

2. Datenverarbeitungseinheit nach Anspruch 1,
**dadurch gekennzeichnet**, daß die Schieberblende (5) bei einer einen U-förmigen Querschnitt aufweisenden Frontblende (1) wenigstens einen L-förmig abgewinkelten, parallel zum U-Schenkel der Frontblende (1) verlaufenden Schenkelansatz aufweist, der bis zum Trennschlitz zwischen Frontblende (1) und Gehäuse (6) der Datenverarbeitungseinheit reicht.

3. Datenverarbeitungseinheit nach Anspruch 1 oder 2,
**dadurch gekennzeichnet**, daß die Schieberblende (5) über den Abdeckbereich der Speichereinheiten (2) hinaus so groß ausgebildet ist, daß zusätzlich ein Schalter (4) zum Ein- bzw. Ausschalten des Gerätes abgedeckt wird.

## Claims

1. Data processing unit with at least one storage unit for portable data media which can be loaded in and removed from the data processing unit via the front side, and with a horizontally movable slide shutter which covers the storage unit and can be locked in the closed state by means of a key-operable swivel-lever lock, characterized in that the slide shutter (5) is arranged behind a front panel (1) covering the front side of the data processing unit with the exception of the storage unit (2) and has a gripping element (7) protruding out of a separating slit between front panel (1) and the housing (6) of the data processing unit, and in that the slide shutter (5) has on at least one of the bounding edges running parallel to the sliding direction a groove-like clearance (10) for a swivel lever (9) of the swivel-lever lock (8), which lever can, in the blocking state, be swivelled in and locked.

2. Data processing unit according to Claim 1, characterized in that, with a front panel (1) having a U-shaped cross section, the slide shutter (5) has at least one leg extension which is angled off in an L-shaped manner, runs parallel to the U-leg of the front panel (1) and reaches as far as the separating slit between front panel (1) and housing (6) of the data processing unit.

3. Data processing unit according to Claim 1 or 2, characterized in that the slide shutter (5) is designed to be of such a size that it extends beyond the covering region of the storage units (2) such that a switch (4) for switching the unit on and off is additionally covered.

## Revendications

1. Unité de traitement de données comportant au moins une unité de mémoire destinée à des supports de données portatifs pouvant être introduits ou retirés au-dessus de la face avant de l'unité de traitement de données, et un panneau coulissant qui peut être déplacé horizontalement, qui recouvre l'unité de mémoire et qui, à l'état fermé, peut être verrouillé à l'aide d'une serrure à levier basculant pouvant être actionnée à l'aide d'une clé, caractérisée par le fait que le panneau coulissant (5) est disposé en arrière d'un panneau frontal (1) qui recouvre la face avant de l'unité de traitement de données à l'exception de l'unité de mémoire (2), et comporte un élément de préhension (7) qui fait saillie hors d'une fente de séparation présente entre le panneau avant (1) et le boîtier (6) de l'unité de traitement de données, et que le panneau coulissant (5) comporte, au moins à l'un des bords limites parallèles à la direction de translation, un évidement en forme de rainure (10) destiné à un levier basculant (9), de la serrure (8), qui peut être basculé et verrouillé à l'état bloqué.

2. Unité de traitement de données suivant la revendication 1, caractérisée par le fait que dans le cas où le panneau avant (1) a une section transversale en forme de U, le panneau coulissant (5) comporte au moins une branche, qui est coudée en forme de L, qui est parallèle à l'âme du U du panneau avant (1) et qui s'étend jusqu'à la fente de séparation présente entre le panneau avant (1) et le boîtier (6) de l'unité de traitement de données.

3. Unité de traitement de données suivant la revendication 1 ou 2, caractérisée par le fait que le panneau coulissant (5) est formé de manière à s'étendre suffisamment au-delà de la zone de recouvrement des unités de mémoire (2) pour masquer en supplément un interrupteur (4) servant à brancher ou débrancher l'appareil.
